# FASCICULE DE BREVET EUROPEEN

(11) **EP 2 432 737 B1**
(45) Date de publication et mention de la délivrance du brevet: **22.04.2015**
(21) Numéro de dépôt: 09784392.4
(22) Date de dépôt: 20.05.2009
(51) Int. Cl.: C02F 1/44, C02F 1/78, B01D 61/18, C02F 1/32, C02F 1/76

(54) **INSTALLATION POUR LE TRAITEMENT D'UNE EAU POLLUEE ET SON PROCEDE DE FONCTIONNEMENT**
ANLAGE ZUR BEHANDLUNG VON VERSCHMUTZTEM WASSER UND VERFAHREN ZU IHREM BETRIEB
PLANT FOR TREATING POLLUTED WATER, AND METHOD FOR THE OPERATION THEREOF

(43) Date de publication de la demande: 28.03.2012
(73) Titulaire: Vichem (SA), 1950 Sion (CH)
(72) Inventeur: MALUGANI, Gérard, F-38000 Grenoble (FR); SIRBA, Thierry, CH-1950 Sion (CH)
(74) Mandataire: Roman, Alexis
(86) Numéro de dépôt international: PCT/FR2009/050947
(87) Numéro de publication internationale: WO 2010/133774

(56) Documents cités:
- EP-A- 0 634 362
- FR-A1- 2 928 366
- US-A1- 2003 189 006
- US-A1- 2005 139 530
- US-A1- 2006 021 929
- US-A1- 2007 102 347
- M. SARTOR ET AL: "Demonstration of a new hybrid process for the decentralised drinking and service water production from surface water in Thailand" DESALINATION, [Online] no. 222, 25 avril 2007 (2007-04-25), pages 528-540, XP002500398 Halkidiki,Greece Extrait de l'Internet: URL:http://www.desline.com/71c-tc.shtml> [extrait le 2008-10-20] cité dans la demande

## Description

### Domaine technique de l'invention.

L'invention a pour objet une installation permettant le traitement d'une eau polluée. Elle concerne également un procédé permettant de faire fonctionner une telle installation.

L'invention concerne le domaine technique du traitement des eaux polluées telles que : eau douce superficielle (rivières, lacs, barrages, ...), eau stagnante, eau résiduelle, eau usée de procédés industriels, etc. Elle concerne plus particulièrement les traitements par filtration membranaire couplée à de l'ozonation. Le but est d'éliminer principalement les polluants micro-biologiques, organiques et inorganiques de l'eau à traiter, même dans des concentrations élevées, en vue de la rejeter sans dommage pour l'environnement et/ou en vue de produire de l'eau potable.

### État de la technique.

En général, la présence de polluants micro-biologiques et organiques (matières en suspension, bactéries, spores, virus, des micros algues, ou autres) engendre une odeur spécifique, une turbidité élevée, un goût et une saveur désagréables, une couleur prononcée, ..., en résumé des paramètres physiques détériorés qui, en plus d'être nocifs, rendent l'eau polluée inutilisable. A moindre concentration, ces mêmes polluants peuvent être présents sans que les qualités physiques de l'eau soient affectées. Pourtant, dans ce cas, l'eau est impropre à la consommation humaine. La présence de polluants inorganiques tels que nitrates, hydrocarbures, cations métalliques (fer, aluminium, mercure, sodium, calcium, métaux lourds, ...), pesticides, ou autres, rend dans tous les cas inexploitable l'eau polluée.

Le problème technique du traitement d'une eau polluée est très complexe de par sa nature et des immenses variétés de polluants possibles à éliminer. La plupart du temps, ces paramètres varient dans de très larges plages et une grande partie des polluants sont périodiques ou seulement épisodiques. Cela explique la multitude de procédés développés sur le traitement des eaux, en vue de les rendre potables (consommation humaine) ou pour garantir une application technique et de service (destination industrielle et/ou rejet dans l'environnement)

Parmi les procédés de traitement existants, on connaît l'utilisation de membranes filtrantes destinées à être traversées par l'eau polluée, cette dernière sortant épurée. Il s'agit d'une séparation sélective des particules contenues dans l'eau à traiter dépendant des caractéristiques de la membrane utilisée et en particulier de la taille des pores. On peut éliminer des particules de taille relativement importante (micro-filtration avec des membranes ayant des pores de quelques micromètres) ou des particules de taille beaucoup plus réduite telles que sels de l'eau, solides dissous, matières organiques, virus, bactéries, etc (osmose inverse ou nano-filtration : si l'on applique à une solution aqueuse en contact avec une membrane semi-perméable une pression supérieure à la pression osmotique, de l'eau pure traverse alors ladite membrane).

Le colmatage est un phénomène de réduction des performances de filtration, dû à une couche de particules qui se dépose sur la surface de la membrane et qui bouche les pores. C'est une des principales limitations de l'application des membranes et, un des principaux inconvénients. Ce problème peut être solutionné par un rétro-lavage périodique, effectué à fréquence courte et régulière, avec du pérmeat. Bien qu'efficace, le rétro-lavage implique la consommation d'importants volumes d'eau déjà traitée et d'énergie, ce qui diminue sensiblement le rendement global des techniques membranaires.

Un autre inconvénient des procédés membranaires existants est qu'ils génèrent en général une quantité de rejets liquides avec des polluants concentrés qui doivent être traités d'une manière spécifique selon leur nature chimique et/ou micro-biologique.

Pour tenter de remédier à ces problèmes, il est connu de coupler la filtration membranaire à de l'ozonation. Cette technique consiste à injecter de l'eau ozonée dans un réacteur où sont disposées les membranes. L'ozone est un oxydant très puissant produit in situ par le passage de molécules de dioxygène au travers d'un arc électrique. Cette puissance d'oxydation peut de surcroît être augmentée par l'ajout de peroxyde d'oxygène conduisant à la formation de radicaux hydroxyles OH-. L'action de l'ozone permet de détruire quasiment tous les micro-organismes ainsi que les bactéries, les molécules de haut poids moléculaire, les hydrocarbures aromatiques polycycliques (HAP), la matière organique dissoute, etc. En couplant des techniques de filtration membranaire et d'ozonation, un grand nombre de polluants peut ainsi être traité.

Il a également été mis en évidence que l'ozonation réduit le colmatage des membranes, en dégradant et dissolvant la couche de particules qui se forme sur leur surface. On pourra par exemple se référer aux documents suivants: US 2006175256 (UNIV MICHIGAN) ; Kim, Somiya. « Effective Combination of Microfiltration and Intermittent Ozonation for High Permeation Flux and VFAs Recovery from Coagulated Raw Sludge ». Environ. Technol., 22:7-15 (2001); Kim, Somiya, Fujii. « Fouling Control of Cermaic Membrane in Organic Acid Fermenter by Intermittent Ozonation ». In Proceedings of the 14th Ozone World Congress. Vol. 1, pp. 131-143, Dearborn, Mich. (1999). Le couplage filtration membranaire/ozonation permet donc de réduire et/ou d'éliminer le retro-lavage et ainsi épargner du pérmeat (l'eau traitée) et de l'énergie, tout en gardant un débit constant.

On connaît une installation développée par la société UPT SCHRIFTENREIHE (ci-après dénommée « installation UPT ») dans laquelle la filtration membranaire a été couplée à une ozonation. Cette installation comprend :
- un réacteur de filtration étanche, dans lequel circule l'eau polluée à traiter, ledit réacteur étant équipé :
   → de membranes destinées à être traversées par l'eau polluée pour séparer sélectivement les particules contenues dans l'eau à traiter,
   → de moyens pour injecter de l'ozone gazeux à l'intérieur du réacteur,
- une pompe d'entrée agencée en amont dudit réacteur pour amener l'eau polluée depuis un circuit d'entrée jusqu'à l'intérieur dudit réacteur,
- une pompe de sortie agencée en aval dudit réacteur pour évacuer l'eau épurée depuis la sortie desdites membranes vers un circuit d'évacuation.

Cette installation est par exemple décrite dans le document M. SATOR ET AL. « Demonstration of a new hybrid process for the decentralised drinking and service water production from surface water in Thailand ». DESALINATION, [ONLINE] n°222, 25 avril 2007, pages 528-540. Une installation similaire est décrite dans le document US 2006/021929 (MANNHEIM et al).

Cette installation est particulièrement efficace car elle permet de :
- assurer la production d'eau sans polluants inorganiques, organiques et micro-biologiques et, ceci même si l'eau entrante est très chargée et/ou avec une composition très variable
- résoudre le problème de colmatage des membranes par l'utilisation d'un traitement ozone gazeux. L'ozonisation est effectuée dans un réacteur spécialement conçu qui permet que les deux étapes (ozonisation et filtration) soient effectuées en même temps, ce qui réduit sensiblement l'énergie utilisée et augmente l'efficacité de la filtration.
- réduire la fréquence des lavages chimiques, dans certains cas leur élimination du cycle de fonctionnement de la filtration membranaire, ceci pour épargner l'utilisation des substances chimiques ainsi que de l'eau propre (pérmeat).

Toutefois, l'installation UPT présente certaines contraintes de fonctionnement. En effet, le réacteur est uniquement configuré pour recevoir un seul type de membrane et en particulier des membranes céramiques plates travaillant en dépression. Ceci peut être un inconvénient car de manière générale, on utilise un type de membrane pour un type d'eau polluée. L'installation UPT est donc dimensionnée et paramétrée selon les caractéristiques spécifiques de l'eau à traiter. Or, dans la nature, on trouve rarement de l'eau avec des paramètres stables, sans variations. En effet, les caractéristiques des eaux polluées ne sont pas homogènes d'un site à l'autre. Les variations importantes dans les concentrations des polluants provoquent la réduction ou la disparition du pouvoir filtrant des membranes. Si cette installation doit être mise en service sur un autre site où l'eau polluée comporte des caractéristiques différentes, il est nécessaire non seulement de prévoir des pré-traitements en amont du réacteur, mais également de modifier le process (temps et fréquence d'ozonation, fréquence des rétro-lavage, ...) de sorte que l'eau polluée circulant dans ledit réacteur ait des caractéristiques quasi-constantes quelles que soient les caractéristiques initiales de l'eau à traiter. Cela peut également nécessiter des lavages chimiques périodiques du réacteur avec arrêt de l'installation et une consommation importante d'eau et d'énergie. D'un autre coté, les lavages chimiques produisent des eaux usées à traiter parallèlement. Cet état des choses nécessite des réglages longs et coûteux en main d'oeuvre avant la mise en fonctionnement de l'installation UPT, ce qui peut être préjudiciable lorsque des situations d'urgence doivent être gérées, notamment celles faisant suite à des catastrophes naturelles.

En outre, le fait de ne pouvoir utiliser qu'un seul type de membrane limite le débit d'eau épurée pouvant être produite. En effet, les membranes sont généralement configurées pour que leur pouvoir filtrant soit optimisé à un débit donné. Si le débit d'eau épurée à fournir doit augmenter, il est nécessaire de rajouter des membranes dans le réacteur. Cette solution peut rapidement devenir onéreuse selon le type de membranes utilisées.

Les documents US 6.428.705 (ALLEN), US 2003/189006 (ALLEN), US 2007/102347 (MATSUSHIRO) et EP 0.634.362 (SUGIMATO) décrivent une installation dans laquelle le nombre de membranes peut varier mais ces dernières sont toujours d'un seul type. Le document US 2005/139530 (HEISS) décrit une installation comportant plusieurs étages de filtration, chaque étage pouvant être activé ou non selon les caractéristiques de l'eau à traiter. L'étage d'ultrafiltration peut comporter soit des membranes immergées dans le réservoir soit des membranes émergées disposées à l'extérieur dudit réservoir. Aucun réservoir unique n'est configuré pour recevoir différents types de membranes.

Face aux inconvénients de l'art antérieur et en particulier à ceux liés aux fonctionnements de l'installation UPT, le problème technique principal que vise à résoudre l'invention est de proposer un réacteur modulable selon le type d'eau à traiter.

Un autre objectif de l'invention est de proposer une installation permettant d'obtenir rapidement, avec un minimum de réglage et avec peu d'énergie, une eau épurée pouvant être réutilisée comme eau potable ou à *minima* être réutilisée comme eau technique ou reversée, sans risque pour la nature, quelles que soit les caractéristiques initiales de l'eau polluée à traiter.

Encore un autre objectif de l'invention est de proposer une installation dont le débit d'eau épurée produite peut facilement varier, et cela à moindre coût.

L'invention a également pour objectif de proposer un réacteur de conception simple, peu onéreux et ayant un rendement élevé.

Un autre objectif de l'invention est de proposer un procédé permettant de facilement faire fonctionner une telle installation.

### Divulgation de l'invention.

La solution proposée par l'invention est une installation selon la revendication principale et du type UPT décrite précédemment .

Cette nouvelle installation est particulièrement avantageuse puisqu'elle perfectionne les installations UPT en permettant de modifier rapidement le type de membranes utilisées selon les caractéristiques initiales de l'eau à traiter. Il est en effet rentable de pouvoir changer rapidement de types de membranes et de régler leurs paramètres de fonctionnement (travail en pression négative ou positive) selon le type d'eau à traiter plutôt que de prévoir des pré-traitements complexes en amont du réacteur et/ou de modifier le process.

Selon une caractéristiques avantageuse de l'invention, les pompes d'entrée et de sortie sont reliées une unité de commande via des connexions électriques, laquelle unité se matérialise sous la forme d'un ordinateur muni d'une interface permettant d'inscrire la pression de travail souhaitée à l'intérieur du réacteur, ladite unité étant configurée pour commander le moteur desdites pompes pour atteindre la pression voulue.

Dans une variante de réalisation, les pompes d'entrée et de sortie sont reliées une unité de commande via des connexions électriques, laquelle unité comporte une zone mémoire dans laquelle est répertoriée une liste de modèles de membranes associés à leur pression de travail respective.

Selon encore une autre caractéristique avantageuse de l'invention facilitant la conception du réacteur, ce dernier a une forme parallélépipédique. Dans une variante de réalisation permettant d'optimiser la répartition des pressions à l'intérieur du réacteur, ce dernier a une forme sensiblement cylindrique.

Selon encore une autre caractéristique avantageuse de l'invention permettant de réduire le colmatage des membranes, les moyens pour injecter l'ozone gazeux sont des buses reliées à un ozoneur et agencées à l'intérieur du réacteur de sorte que les bulles d'ozone formées soient injectées en direction des toutes les parois des membranes. De cette manière, on favorise un phénomène de catalyse qui apparaît au niveau des parois des membranes céramiques et ayant pour effet d'améliorer la destruction de la couche de particules présente sur la surface desdites membranes.

Selon encore une autre caractéristique de l'invention permettant de stocker efficacement l'eau épurée, la pompe de sortie est agencée pour épurée, une pompe est agencée en aval de la cuve de stockage pour amener l'eau stockée dans ladite cuve vers un filtre à charbon actif.

Selon encore une autre caractéristique avantageuse de l'invention permettant de simplifier le rétro-lavage des membranes, la pompe de sortie est réversible de manière à pouvoir amener de l'eau épurée stockée dans la cuve de stockage jusqu'à la sortie des membranes et effectuer un rétro-lavage desdites membranes.

Selon encore une autre caractéristique avantageuse de l'invention permettant de rapidement faire évoluer le process de l'installation selon les caractéristiques de l'eau polluée à traiter, le réacteur intègre des capteurs pour analyser la qualité de ladite eau polluée, lesdits capteurs étant agencés avec les moyens pour injecter l'ozone gazeux de manière à régler le débit d'ozone injecté et les périodes d'ozonation en fonction de la qualité de l'eau analysée.

Selon encore une autre caractéristique avantageuse de l'invention, les membranes sont organisées par groupes à l'intérieur du réacteur, les sorties des membranes d'un même groupe étant reliées à un même conduit d'évacuation équipé d'une vanne, l'ouverture et la fermeture de chacune desdites vannes étant pilotées indépendamment de manière à régler le nombre de groupes de membranes à activer simultanément.

Un autre aspect de l'invention concerne une unité mobile pour le traitement d'une eau polluée constituée d'un container de dix pieds transportable, à l'intérieur duquel est disposée l'installation conforme aux caractéristiques précédentes. Cette unité mobile peut fonctionner de manière autonome et peut être rapidement transportée, installée et mise en oeuvre au coeur des zones sinistrées difficiles d'accès.

Encore un autre aspect de l'invention concerne un procédé pour faire facilement et rapidement fonctionner l'installation conforme aux caractéristiques précédentes, ledit procédé consistant à :
- disposer à l'intérieur du réacteur des membranes adaptées au traitement de l'eau polluée à traiter,
- régler le débit des pompes d'entrée et de sortie afin que lesdites membranes puissent travailler en pression négative ou en pression positive selon le type de membranes utilisées.

Selon une caractéristique avantageuse de ce procédé, on effectue un rétro-lavage des membranes environ toutes les 120 minutes en injectant au niveau des sorties des membranes, l'eau épurée issue du réacteur.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente de manière schématique les différents éléments constitutifs de l'installation selon un mode de réalisation de l'invention,
- la figure 2 est une vue schématique en coupe verticale du réacteur selon l'invention équipé de membranes cylindriques,
- la figure 3 est une vue en coupe selon A-A du réacteur de la figure 2,
- la figure 4 est une vue schématique en coupe verticale du réacteur selon l'invention équipé de membranes plates,
- la figure 5 est une vue en coupe selon B-B du réacteur de la figure 4,
- la figure 6 est une vue schématique en coupe verticale du réacteur selon l'invention dans une variante de réalisation, ledit réacteur étant équipé de membranes cylindriques,
- la figure 7 est une vue en coupe selon C-C du réacteur de la figure 6.

### Modes de réalisation de l'invention.

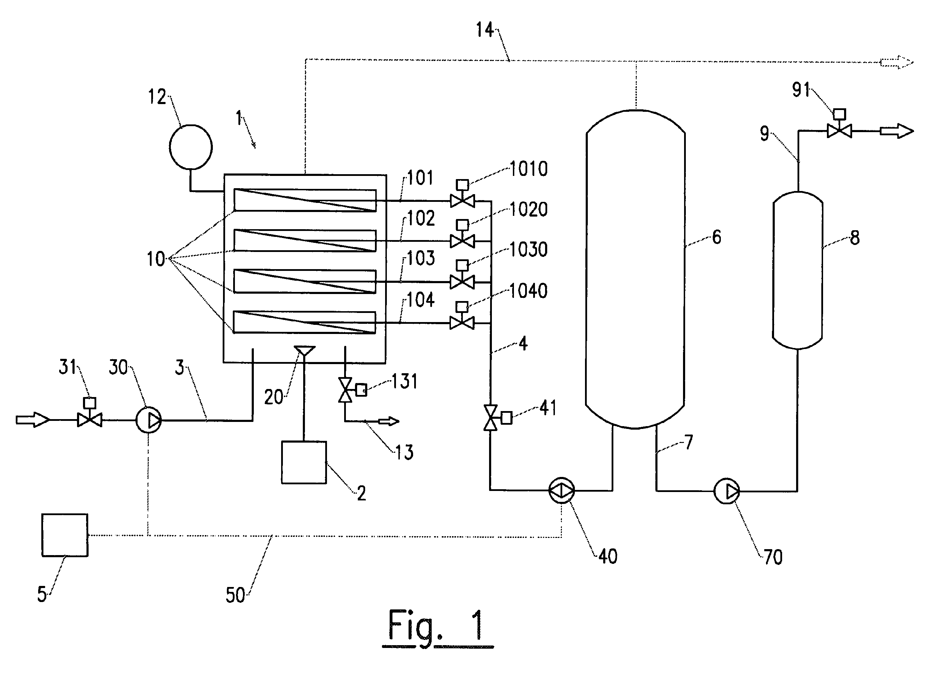

En se rapportant à la figure 1, l'installation objet de l'invention est équipée d'un réacteur de filtration 1 étanche, dans lequel circule l'eau polluée à traiter. Le réacteur 1 est équipé de membranes 10 destinées à être traversées par l'eau polluée pour séparer sélectivement les particules contenues dans l'eau à traiter. En pratique, le réacteur 1 a un volume d'environ 3 m³ et la surface active des membranes 10 varie de 10 m² (micro-filtration) à 50 m² (ultra-filtration). Comme décrit plus après dans la description, la surface totale active des membranes 10 peut varier selon le nombre de membranes utilisées.

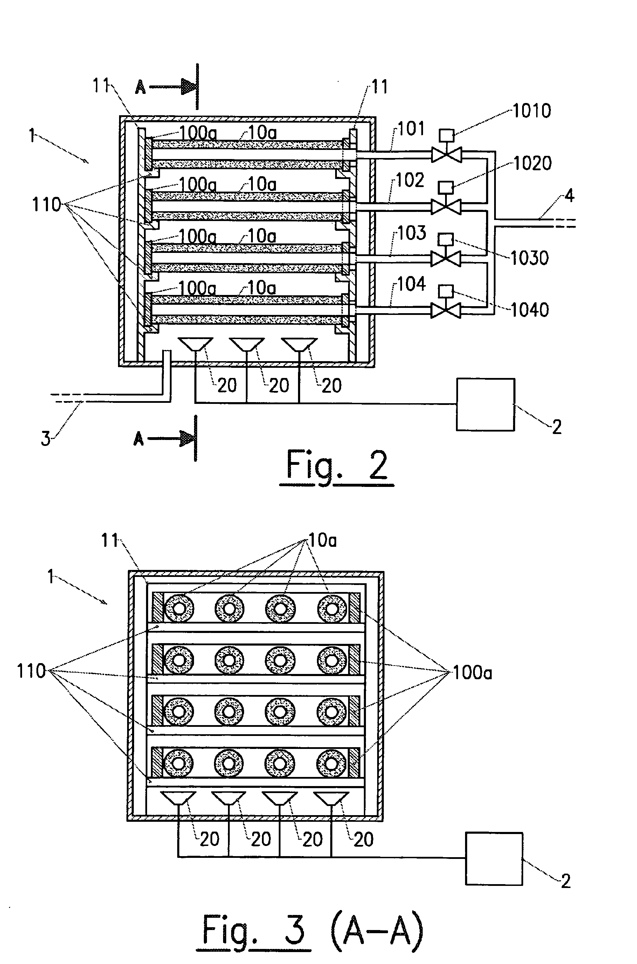

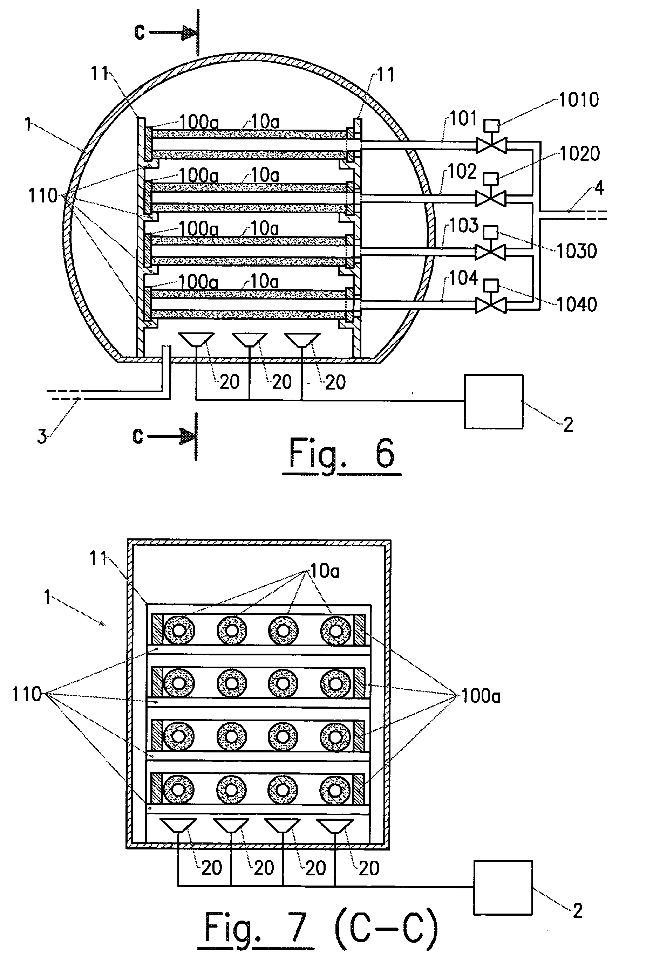

Le réacteur 1 peut avoir une forme parallélépipédique (figures 2 à 5) ou préférentiellement une forme sensiblement cylindrique (figures 6 et 7). Dans le premier cas, la conception du réacteur 1 est simple,simple mais du fait des pressions régnant à l'intérieur, la structure dudit réacteur est susceptible de se déformer. Dans le second cas, les pressions sont mieux réparties à l'intérieur du réacteur 1, la structure de ce dernier ayant tendance à moins se déformer.

En se référant à la figure 1, une pompe d'entrée 30 est agencée en amont du réacteur 1 pour amener l'eau polluée depuis un circuit d'entrée 3 jusqu'à l'intérieur dudit réacteur. En pratique, l'eau polluée à traiter pourra provenir d'eau douce de surface, de forage, d'eau saumâtre, d'eau stagnante, d'eau résiduelle, d'eau usée issue de procédés industriels, etc, chargées de polluants organiques, inorganiques et/ou micro-biologiques. On utilise préférentiellement une pompe d'exhaure centrifuge démontable disposée à proximité de la source d'eau polluée à traiter et reliée à de la tuyauterie flexible de qualité alimentaire. Une vanne 31 est avantageusement prévue sur le circuit 3, en amont de la pompe d'entrée 30, de façon à pouvoir isoler ledit circuit. En se rapportant aux figures 2 à 7, le circuit d'entrée 3 débouche dans la partie inférieure du réacteur 1. Toutefois, on peut prévoir de le faire déboucher dans une autre partie dudit réacteur, par exemple au niveau de ses parois latérales.

En se rapportant à la figure 1, un système de purge est prévu de manière à pouvoir évacuer l'eau résiduelle contenue dans le réacteur 1. En pratique, un conduit 13 est disposé dans la partie inférieure du réacteur 1 de manière à ce que l'eau résiduelle puisse s'évacuer par gravité. Une vanne 131 est avantageusement prévue sur le conduit 13 de manière à pouvoir contrôler la purge du réacteur 1. Le conduit 13 sera avantageusement relié à une cuve de stockage des eaux résiduelles ou directement connecté vers une station d'épuration.

Une pompe de sortie 40 est agencée en aval du réacteur 1 de façon à évacuer l'eau épurée depuis la sortie des membranes 10 vers un circuit d'évacuation 4. La pompe de sortie 40 est du même type que la pompe d'entrée 30. Une vanne 41 est avantageusement prévue sur le circuit 4, en amont de la pompe de sortie 40, de façon à pouvoir isoler ledit circuit.

Les différences de débits entre la pompe d'entrée 30 et la pompe de sortie 40, permettent de réguler la pression à l'intérieur du réacteur 1 et en particulier permettent de régler la pression de travail des membranes 10.

Conformément aux figures annexées, les membranes 10 sont organisées par groupes à l'intérieur du réacteur 1. En pratique, chaque groupe de membranes représente une surface active de filtration d'environ 10 m². Ces groupes peuvent consister soit en des colonnes de membranes, soit en des lignes de membranes, soit en une combinaison de colonnes et de lignes de membranes. Sur les figures annexées, les membranes 10 sont organisées par lignes. Les sorties des membranes 10 d'un même groupe sont avantageusement reliées à un même conduit d'évacuation, respectivement 101, 102, 103, 104. Ces conduits sont chacun équipés d'une vanne, respectivement 1010, 1020, 1030, 1040. Chaque conduit d'évacuation 101, 102, 103, 104 est relié au circuit d'évacuation 4. L'ouverture et la fermeture de chacune des vannes 1010, 1020, 1030, 1040 sont pilotées indépendamment de manière à régler le nombre de groupes de membranes 10 à activer simultanément. Par exemple, pour un débit important d'eau à traiter, toutes les vannes 1010, 1020, 1030, 1040 seront ouvertes de manière à activer tous les groupes de membranes. Si le débit d'eau à traiter est moindre, on n'ouvrira qu'une seule ou plusieurs vannes de manière à n'activer qu'un nombre restreint de groupes de membranes 10. On notera qu'il est ainsi possible de faire varier la surface active des membranes 10, ladite surface étant proportionnelle au nombre de membranes utilisées, et donc au nombre de vannes 1010, 1020, 1030, 1040 ouvertes.

Le débit de pointe du réacteur 1 est d'environ 10 m³/H lorsque toutes les membranes sont actives. Le débit de production varie selon l'origine de l'eau à traiter. À partir d'eau douce de surface ou de forage faiblement polluée, le débit moyen de production est d'environ 10 m³/H. Pour des eaux saumâtres ou plus fortement polluées, le débit moyen de production varie de 1 m³/H à 5 m³/H.

En se rapportant à la figure 1, le réacteur 1 est également équipé de moyens pour injecter de l'ozone gazeux à l'intérieur dudit réacteur. En pratique on utilise un ozoneur 2 dont la sortie est reliée à des buses 20 disposées à l'intérieur du réacteur 1. Dans une variante de réalisation, il est possible d'injecter l'ozone dans l'eau polluée, en amont du réacteur 1. C'est donc un mélange eau polluée/ozone qui pénètre dans le réacteur 1. Dans cette configuration, il est préférable d'utiliser un mélangeur statique en amont du réacteur 1 de façon à homogénéiser la répartition de l'ozone dans l'eau polluée.

Il a toutefois été mis en évidence par la demanderesse que l'injection d'ozone gazeux directement dans le réacteur 1 (et non en amont de ce dernier) permet de générer des bulles de gaz provoquant des turbulences non seulement bénéfiques pour l'élimination des polluants mais également bénéfiques pour décoller la couche de particules disposée sur la paroi des membranes 10. Pour ces raisons, il est avantageux de prévoir des buses 20 agencées à l'intérieur du réacteur de sorte que les bulles d'ozone soient injectées en direction des membranes 10. En pratique, on utilise des buses 20 en forme d'entonnoir dont le plus grand diamètre est dirigé vers l'intérieur du réacteur 1 de manière à augmenter au maximum la surface de formation des bulles d'ozone. En se rapportant aux figures 2 à 7, plusieurs buses 20 sont réparties de manière homogène dans la partie inférieure du réacteur 1 de façon à ce que la plus grande surface de membranes puisse être atteinte par les bulles d'ozone. Dans cette configuration, les parois inférieures des membranes 10, c'est-à-dire les parois situées en-vis-à-vis des buses 20, sont les parois les plus sollicitées par les bulles d'ozone.

La demanderesse a également mis en évidence que lorsque les bulles d'ozone atteignent les parois de membranes en céramiques, un phénomène de catalyse apparaît au niveau desdites parois qui a pour effet d'améliorer la destruction de la couche de particules présente sur la surface desdites membranes. Il peut donc être avantageux de prévoir plusieurs buses réparties de manière homogène non seulement dans la partie inférieure du réacteur 1 mais également sur les parois latérales de ce dernier, de façon à ce que les bulles d'ozone puissent être injectées en direction de toutes les parois desdites membranes.

Il peut également être avantageux de disposer à l'intérieur du réacteur des micro-billes d'un diamètre compris entre 1 µm et 5 mm, préférentiellement 0.5 mm, réalisées dans un matériau souple de manière à ne pas endommager les membranes 10, préférentiellement en caoutchouc souple. Ces micro-billes sont disposées dans le réacteur 1 de manière à pouvoir être mises en mouvement par les turbulences créées par les bulles d'ozone. Les micro-billes se déplacent de manière chaotique dans le réacteur 1 et viennent impacter les membranes 10 en décollant la couche de particules disposée sur la paroi desdites membranes.

L'ozone gazeux est produit par un ozoneur 2 du type connu de l'homme du métier. Un venturi peut éventuellement être disposé en amont des buses 20 de manière à accélérer l'injection de l'ozone. L'ozoneur 2 est choisi de manière à pouvoir délivrer une quantité d'ozone gazeux comprise entre 0.1 g/H et 10 Kg/H selon les caractéristiques de l'eau polluée et le débit d'eau à traiter, la concentration d'ozone dans le réacteur 1 variant de 30 g/m³ à 500 g/m³. En pratique, la quantité d'ozone injectée dans le réacteur 1 est proportionnelle à la concentration des polluants présents dans l'eau à traiter. De même, la quantité d'ozone injectée dans le réacteur 1 est proportionnelle au débit d'eau à traiter Le temps et le débit d'ozonation sont définis en fonction des caractéristiques de l'eau polluée à traiter. La concentration d'ozone dans le réacteur 1 est avantageusement contrôlée par des analyseurs.

Conformément à l'invention, le réacteur 1 peut intégrer des capteurs 12 pour analyser la qualité de l'eau polluée. Ces capteurs sont agencés avec les moyens pour injecter l'ozone gazeux de manière à régler le débit d'ozone injecté et les périodes d'ozonation en fonction de la qualité de l'eau analysée. En pratique, les capteurs 12 sont configurés pour analyser les paramètres organoleptiques (couleur, turbidité, odeur, saveur), les paramètres physico-chimiques (pH, température, conductivité), les paramètres micro-biologiques, les substances indésirables (nitrates, hydrocarbures, ...), les substances toxiques (arsenic, plomb, ...), les pesticides, ou autres polluants. Les capteurs 12 sont reliés à une unité centrale capable de commander l'ozoneur 2 pour faire varier la quantité d'ozone produit.

En sortie des membranes 10, l'eau épurée peut être reversée directement dans la nature. Préférentiellement, l'eau épurée est évacuée vers une cuve de stockage 6, via la pompe de sortie 40. Il est en effet avantageux de pouvoir momentanément stocker l'eau épurée notamment pour l'utiliser lors des opérations de rétro-lavage des membranes 10. Pour ce faire, la pompe de sortie 40 est réversible de manière à pouvoir amener de l'eau épurée stockée dans la cuve de stockage 6 jusqu'à la sortie des membranes 10 et effectuer un rétro-lavage desdites membranes. En pratique, on effectue un rétro-lavage des membranes 10 environ toutes les 120 minutes en injectant au niveau des sorties desdites membranes, l'eau épurée issue du réacteur 1 et en particulier l'eau stockée dans la cuve 6.

L'extrémité supérieure du réacteur 1 et éventuellement l'extrémité supérieure de la cuve de stockage 6 sont reliées à un conduit 14 pour l'évacuation des gaz. Cette évacuation permet d'éviter des surpressions dangereuses à l'intérieur de ces enceintes.

Enfin, il est peut être avantageux d'effectuer un post-traitement par une filtration au charbon actif de l'eau épurée. Cette dernière étape est surtout prévue pour absorber les couleurs et réduire les odeurs et le goût de l'eau résiduaire, paramètres importants lorsqu'on veut potabiliser une eau. Pour ce faire, on utilise une pompe 70 agencée en aval de la cuve de stockage 6 pour amener l'eau stockée dans ladite cuve vers un filtre à charbon actif 8. Comme représentée sur la figure 1, la pompe 70 est disposée sur un circuit 7 reliant la cuve de stockage 6 au filtre à charbon actif 8. Un conduit 9 permet d'évacuer l'eau épurée en sortie du filtre 8, directement dans la nature ou vers une installation de distribution d'eau potable. Une vanne 91 est avantageusement prévue sur le circuit 9 de façon à pouvoir contrôler l'évacuation de l'eau en sortie du filtre 8.

Bien que cela ne soit pas nécessaire, des post-traitements peuvent être prévus, mais non nécessaires, à la sortie du réacteur 1. En particulier, on pourra prévoir une chloration et/ou un traitement UV si certains polluants et en particuliers certaines bactéries ou virus, ne sont pas totalement éliminés. A cette fin, il peut être utile d'équiper le circuit d'évacuation 4 de capteurs permettant de contrôler la qualité de l'eau en sortie du réacteur 1. Selon la qualité de l'eau analysée, cette dernière pourra être dirigée vers un poste de post-traitement adapté.

Il est également possible, mais non nécessaire, de prévoir des pré traitements en amont du réacteur 1 selon le type d'eau à traiter de façon a conserver des débits de traitement quasi-constants. En particulier, il peut être avantageux de prévoir :
- des filtres pour retenir les substances supérieures à 10 mm tels que feuilles, branchages, et autres déchets,
- un bassin de décantation pour retenir les particules polluantes les plus lourdes,
- des étapes de coagulation et floculation pour séparer les colloïdes ou autres matières en suspension.

Conformément à l'invention, les membranes 10 sont montées de manière amovible à l'intérieur du réacteur 1, ce dernier étant configuré pour recevoir alternativement différents types de membranes. Par exemple, le réacteur 1 peut recevoir des membranes tubulaires, à fibres creuses, plates, en spirales ou autres, des membranes céramiques, en acétate de cellulose, en polyamide, polypropylène ou autres polymères adaptés, etc. Le type de membranes 10 est choisi selon les caractéristiques de l'eau à traiter et en particulier le type de polluants à éliminer. On dispose donc à l'intérieur du réacteur 1 les membranes 10 qui sont le mieux adaptées au traitement de l'eau polluée. Pour choisir le type de membranes filtrantes, l'homme du métier pourra se référer à : WAGNER Jorgen. « Membrane Filtration Handbook - Practical tips and hints ». Osmonics. 2nd Edition. Novembre 2001.

Les membranes 10 travaillent sous des pressions différentes selon leur type : certaines travaillent en pression négative tandis que d'autres travaillent en pression positive.

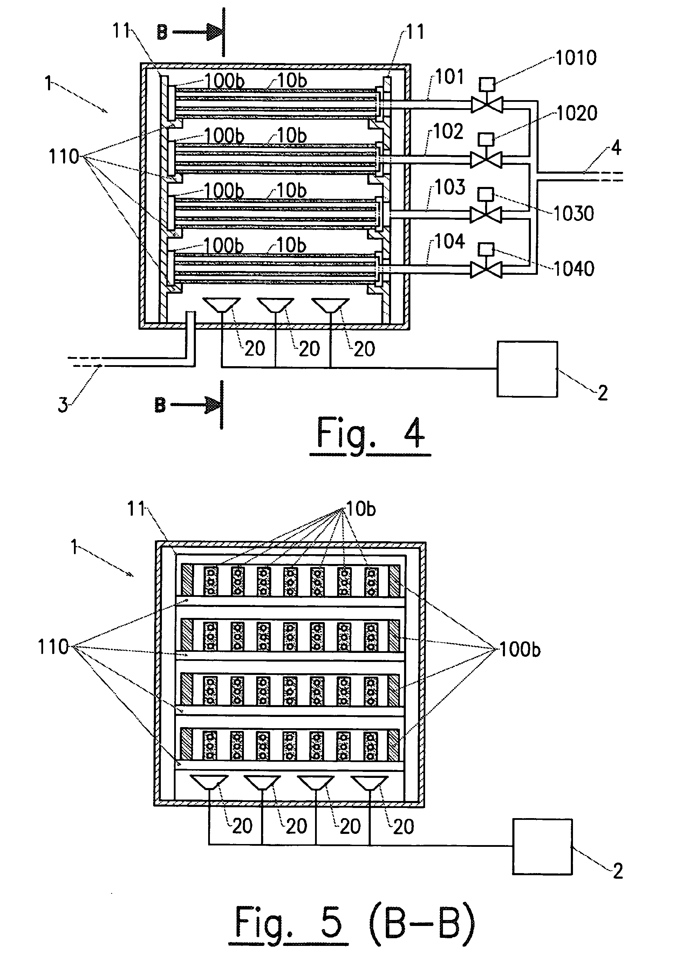

En pratique, pour traiter un large spectre de polluants, le réacteur 1 est configuré pour recevoir des membranes céramiques cylindriques 10a travaillant en pression positive (figures 2, 3, 6 et 7) et des membranes céramiques plates 10b travaillant en pression négative (figures 4 et 5). On utilise préférentiellement des membranes céramiques cylindriques commercialisées par la société ITN NANOVATION®, sous la dénomination Nanopore® et travaillant en pression positive entre 200 mbar et 2 bar. On utilise également préférentiellement des membranes céramiques plates commercialisées sous forme de modules d'environ 90 membranes, par la société ITN NANOVATION® sous la dénomination Nanopore®, travaillant en dépression entre 100 mbar et 500 mbar. Toutefois, des membranes céramiques cylindriques et plates d'autres manufactures peuvent être envisagées.

Les types de membranes utilisées pouvant varier à l'intérieur du réacteur 1, il est nécessaire que les débits de la pompe d'entrée 30 et de la pompe de sortie 40 puissent varier afin de s'adapter à la pression de travail des membranes 10. Par exemple, lorsqu'on utilise des membranes céramiques cylindriques travaillant sous 2 bar, on règlera le débit de la pompe d'entrée 30 de manière à avoir une pression de 4 bar en amont du réacteur 1 et on règlera le débit de la pompe de sortie 40 de manière à avoir une pression de -2 bar en aval dudit réacteur. De même, lorsqu'on utilise des membranes céramiques plates travaillant sous 0.2 bar, on règlera le débit de la pompe d'entrée 30 de manière à avoir une pression de 0.2 bar en amont du réacteur 1 et on règlera le débit de la pompe de sortie 40 de manière à avoir une pression de -0.4 bar en aval dudit réacteur.

Pour régler la pression de travail des membranes 10, et comme schématisé sur la figure 1, les pompes d'entrée 30 et de sortie 40 sont reliées à un dispositif de réglage permettant de faire varier leur débit de pompage de sorte que lesdites membranes puissent travailler en pression négative ou en pression positive. En pratique, ces pompes 30, 40 sont reliées à une unité de commande 5, via des connexions électriques 50. Cette unité de commande 5 peut se matérialiser sous la forme d'un ordinateur muni d'une interface permettant d'inscrire la pression de travail souhaitée à l'intérieur du réacteur 1. L'unité de commande 5 est alors configurée pour commander le moteur des pompes 30, 40 pour atteindre la pression voulue. On peut également prévoir que l'unité de commande 5 comporte une zone mémoire dans laquelle est répertoriée une liste de modèles de membranes associés à leur pression de travail respective. Il suffit à l'utilisateur d'inscrire la référence du modèle utilisé pour que l'unité de commande 5 déduise directement leur pression de travail.

Il est à noter que la génération de bulles d'ozone à l'intérieur du réacteur 4 permet d'augmenter la pression à l'intérieur dudit réacteur. Lorsque les membranes 10 disposées à l'intérieur du réacteur 1 doivent travailler en pression positive, cette surpression naturelle implique un gain d'énergie puisque les pompes d'entrée 30 et de sortie 40 doivent fournir moins d'énergie pour atteindre la pression de travail souhaitée.

En se référant aux figures 2 à 7, pour faciliter le changement des membranes à l'intérieur du réacteur 1, lesdites membranes sont montées de manière amovible dans un support 11 fixé à l'intérieur dudit réacteur. Ce support 11 est constitué de panneaux verticaux, avantageusement réalisés en acier inoxydable, entre lesquels sont positionnées de manière amovible les membranes 10. L'extrémité inférieure de la structure constitutive du support 1 est fixée par soudage ou vissage dans la partie inférieure du réacteur 1.

Dans une variante de réalisation, on peut prévoir de fixer les membranes sur le support 11, ce dernier étant monté de manière amovible dans le réacteur 1. On peut par exemple prévoir d'utiliser plusieurs supports 11 associés à divers type de membranes 10, lesdits supports étant équipés de roues de manière à faciliter leur introduction dans le réacteur 1 et leur retrait hors dudit réacteur. Un système de blocage des roues peut être directement prévu sur le support 11 ou disposé dans la partie inférieure du réacteur 1. Un autre système équivalent consiste à faire coulisser le support 11 dans des rails de guidage disposés dans la partie inférieure du réacteur 1. Dans tous les cas, il est avantageux de prévoir un dispositif de maintien en position du support 11 dans le réacteur 1.

En se rapportant aux figures 2 et 3, lorsque le réacteur 1 est équipé de membranes cylindriques creuses 10a, une première extrémité est bouchée de manière étanche tandis que l'autre extrémité communique avec un des conduits d'évacuation 101, 102, 103, 104. De même, en se rapportant aux figures 4 et 5, lorsque le réacteur 1 est équipé de membranes plates 10b, une première extrémité des canaux est bouchée de manière étanche tandis que l'autre extrémité communique avec un des conduits d'évacuation 101, 102, 103, 104.

Comme cela a été évoqué précédemment, les membranes 10 sont préférentiellement organisées par groupes à l'intérieur du réacteur 1. En se rapportant aux figures 2 à 7, chaque groupe se présente sous la forme d'un module 100a, 100b regroupant plusieurs membranes, respectivement 10a, 10b. Le support 11 comporte des logements spécifiques 110 permettant de recevoir de manière temporaire les différents modules 100a, 100b. En pratique, ces modules s'apparentent à des caissons à l'intérieur desquels sont agencées les membranes, les logements 110 étant configurés pour recevoir et maintenir en place lesdits caissons. Selon une caractéristique avantageuse de l'invention, la forme des modules est identique quel que soit le type de membranes utilisées de manière à faciliter leur mise en place dans les logements 110.

Un autre aspect de l'invention concerne une unité mobile pour le traitement d'une eau polluée constituée d'un container de dix pieds transportable à l'intérieur duquel est disposée l'installation décrite précédemment. Le container utilisé est un conteneur transportable par route, rail, mer et air. L'utilisation de ce conteneur permet d'acheminer rapidement par hélitreuillage ou par camions, l'unité mobile objet de l'invention sur n'importe quelle zone sinistrée difficile d'accès.

Selon une caractéristique avantageuse, l'installation objet de l'invention est entièrement automatisée et fonctionne de manière autonome. En particulier, toutes les vannes sont reliées à une unité centrale commandant leur ouverture et fermeture. Cette unité centrale est reliée à tous les capteurs et autres composants de manière à ce qu'elle puisse contrôler en permanence le bon fonctionnement de l'installation et modifier certains paramètres du process selon la qualité de l'eau analysée. Pour ce faire, l'unité mobile objet de l'invention sera préférentiellement équipée d'un générateur d'électricité autonome.

## Revendications

1. Installation pour le traitement d'une eau polluée, comprenant :
- un réacteur de filtration (1) étanche, dans lequel circule l'eau polluée à traiter, ledit réacteur étant équipé, en usage :
o de membranes (10) destinées à être traversées par l'eau polluée pour séparer sélectivement les particules contenues dans l'eau à traiter, lesdites membranes étant montées de manière amovible dans un support (11) fixé à l'intérieur du réacteur (1),
o de moyens (2, 20) pour injecter de l'ozone gazeux à l'intérieur du réacteur,
- une pompe d'entrée (30) agencée en amont dudit réacteur pour amener l'eau polluée depuis un circuit d'entrée (3) jusqu'à l'intérieur dudit réacteur,
- une pompe de sortie (40) agencée en aval dudit réacteur pour évacuer l'eau épurée depuis la sortie desdites membranes vers un circuit d'évacuation (4),
**se caractérisant par le fait que :**
- plusieurs membranes céramiques cylindriques (10a) adaptées pour travailler en pression sont regroupées dans des premiers modules (100a) s'apparentant à des caissons,
- plusieurs membranes céramiques plates (10b) adaptées pour travailler en dépression sont regroupées dans des seconds modules (100b) s'apparentant à des caissons,
- les premiers modules (100a) et les seconds modules (100b) sont de forme identique,
- le réacteur (1) reçoit alternativement soit les premiers modules (100a), soit les seconds modules (110b) selon les caractéristiques initiales de l'eau à traiter,
- - le support (11) comporte des logements (110) adaptés pour recevoir alternativement, selon le type de membranes utilisées, et de manière temporaire, soit les premiers modules (110a) soit les seconds modules (110b), les mêmes logements étant utilisés pour recevoir et maintenir en place les premiers modules (110a) et les seconds modules (110b), les pompes d'entrée (30) et de sortie (40) sont reliées à un dispositif de réglage (5) adapté pour faire varier leur débit de pompage de sorte que les membranes (10a, 10b) travaillent en pression négative ou en pression positive selon le type de membranes utilisées.

2. Installation selon la revendication 1, dans laquelle les pompes d'entrée (30) et de sortie (40) sont reliées une unité de commande (5) via des connexions électriques (50), laquelle unité se matérialise sous la forme d'un ordinateur muni d'une interface permettant d'inscrire la pression de travail souhaitée à l'intérieur du réacteur (1), ladite unité étant configurée pour commander le moteur desdites pompes pour atteindre la pression voulue.

3. Installation selon la revendication 1, dans laquelle les pompes d'entrée (30) et de sortie (40) sont reliées une unité de commande (5) via des connexions électriques (50), laquelle unité comporte une zone mémoire dans laquelle est répertoriée une liste de modèles de membranes associés à leur pression de travail respective.

4. Installation selon l'une des revendications précédentes, dans laquelle le réacteur (1) a une forme parallélépipédique.

5. Installation selon l'une des revendications 1 à 4, dans laquelle le réacteur (1) a une forme sensiblement cylindrique.

6. Installation selon l'une des revendications précédentes, dans laquelle :
- les moyens pour injecter l'ozone gazeux sont des buses (20) reliées à un ozoneur (2) et agencées à l'intérieur du réacteur (1) de sorte que les bulles d'ozone formées soient injectées en direction de toutes les parois des membranes (10).

7. Installation selon l'une des revendications précédentes, dans laquelle la pompe de sortie (40) est agencée pour évacuer l'eau épurée en sortie des membranes (10) vers une cuve de stockage (6).

8. Installation selon la revendication 7, dans laquelle une pompe (70) est agencée en aval de la cuve de stockage (6) pour amener l'eau stockée dans ladite cuve vers un filtre à charbon actif (8).

9. Installation selon l'une des revendications 7 ou 8, dans laquelle la pompe de sortie (40) est réversible de manière à pouvoir amener de l'eau épurée stockée dans la cuve de stockage (6) jusqu'à la sortie des membranes (10) et effectuer un rétro-lavage desdites membranes.

10. Installation selon l'une des revendications précédentes, dans laquelle le réacteur (1) intègre des capteurs pour analyser la qualité de l'eau polluée à traiter, lesdits capteurs étant agencés avec les moyens (2, 20) pour injecter l'ozone gazeux de manière à régler le débit d'ozone injectée et les périodes d'ozonation en fonction de la qualité de l'eau analysée.

11. Installation selon l'une des revendications précédentes, dans laquelle les membranes (10) sont organisées par groupes à l'intérieur du réacteur (1), les sorties des membranes d'un même groupe étant reliées à un même conduit d'évacuation (101, 102, 103, 104) équipé d'une vanne (1010, 1020, 1030, 1040), l'ouverture et la fermeture de chacune desdites vannes étant pilotées indépendamment de manière à régler le nombre de groupes de membranes à activer simultanément.

12. Unité mobile pour le traitement d'une eau polluée, **se caractérisant par le fait qu'**elle est constituée d'un container de dix pieds transportable à l'intérieur duquel est disposée l'installation conforme à l'une des revendications précédentes.

13. Procédé pour faire fonctionner l'installation conforme aux revendications 1 à 11, consistant à :
- disposer à l'intérieur du réacteur (10) des membranes (10) adaptées au traitement de l'eau polluée à traiter,
- régler le débit des pompes d'entrée (30) et de sortie (40) afin que lesdites membranes puissent travailler en pression négative ou en pression positive selon le type de membranes utilisées.

14. Procédé selon la revendication 13, dans lequel on effectue un rétro-lavage des membranes environ toutes les 120 minutes en injectant au niveau des sorties des membranes (10), l'eau épurée issue du réacteur (1).

## Patentansprüche

1. Anlage zur Behandlung von verschmutztem Wasser, umfassend:
- einen dichten Filterreaktor (1), in dem das zu behandelnde verschmutzte Wasser zirkuliert, wobei der Reaktor während der Nutzung ausgestattet ist mit:
* Membranen (10), die dazu bestimmt sind, von dem verschmutzten Wasser durchströmt zu werden, um selektiv die in dem zu behandelnden Wasser enthaltenen Partikel abzuscheiden, wobei die Membranen abnehmbar in einem Träger (11) montiert sind, der im Inneren des Reaktors (1) befestigt ist,
* Mitteln (2, 20), um gasförmiges Ozon in das Innere des Reaktors einzuleiten,
- eine Eingangspumpe (30), die stromaufwärts zum Reaktor angeordnet ist, um das verschmutzte Wasser von einer Eingangsschaltung (3) in das Innere des Reaktors zu leiten,
- eine Ausgangspumpe (40), die stromabwärts zum Reaktor angeordnet ist, um das gereinigte Wasser vom Ausgang der Membranen zu einer Ableitungsschaltung (4) abzuleiten,
**dadurch gekennzeichnet, dass**
- mehrere zylindrische Keramikmembranen (10a), die dazu vorgesehen sind, mit Druck zu arbeiten, in ersten Modulen (100a), die Kästen ähnlich sind, zusammengefasst sind,
- mehrere flache Keramikmembranen (10b), die dazu vorgesehen sind, mit Unterdruck zu arbeiten, in zweiten Modulen (100b), die Kästen ähnlich sind, zusammengefasst sind,
- die ersten Module (100a) und die zweiten Module (100b) von identischer Form sind,
- der Reaktor (1) alternativ entweder die ersten Module (100a) oder die zweiten Module (100b) aufnimmt, je nach den Ausgangsmerkmalen des zu behandelnden Wassers,
- der Träger (11) Lagerungen (110) umfasst, die dazu vorgesehen sind, alternativ, je nach verwendetem Membrantyp, und vorübergehend entweder die ersten Module (100a) oder die zweiten Module (100b) aufzunehmen, wobei dieselben Lagerungen verwendet werden, um die ersten Module (100a) und die zweiten Module (100b) aufzunehmen und an Ort und Stelle zu halten, wobei die Eingangs- (30) und Ausgangspumpen (40) mit einer Regelvorrichtung (5) verbunden sind, die dazu vorgesehen ist, die Pumpmenge zu variieren, so dass die Membranen (10a, 10b) mit negativem Druck oder mit positivem Druck arbeiten, je nach verwendetem Membrantyp.

2. Anlage nach Anspruch 1, bei der die Eingangs- (30) und Ausgangspumpen (40) mit einer Steuereinheit (5) über elektrische Anschlüsse (50) verbunden sind, wobei diese Einheit in Form eines Computers vorhanden ist, der mit einer Schnittstelle versehen ist, die es ermöglicht, den gewünschten Arbeitsdruck im Inneren des Reaktors (1) einzugeben, wobei die Einheit derart konfiguriert ist, dass sie den Motor der Pumpen derart steuert, dass der gewünschte Druck erreicht wird.

3. Anlage nach Anspruch 1, bei der die Eingangs- (30) und Ausgangspumpen (40) mit einer Steuereinheit (5) über elektrische Anschlüsse (50) verbunden sind, wobei diese Einheit eine Speicherzone umfasst, in der eine Liste von Membranmodellen, die ihrem jeweiligen Arbeitsdruck zugeordnet sind, aufgezeichnet ist.

4. Anlage nach einem der vorhergehenden Ansprüche, bei der der Reaktor (1) eine parallelflache Form hat.

5. Anlage nach einem der Ansprüche 1 bis 4, bei der der Reaktor (1) eine im Wesentlichen zylindrische Form hat.

6. Anlage nach einem der vorhergehenden Ansprüche, bei der:
- die Mittel zum Einleiten des gasförmigen Ozons Düsen (20) sind, die mit einem Ozonator (2) verbunden und im Inneren des Reaktors (1) angeordnet sind, so dass die Ozonblasen, die gebildet werden, in Richtung aller Wände der Membranen (10) eingeleitet werden.

7. Anlage nach einem der vorhergehenden Ansprüche, bei der die Ausgangspumpe (40) derart angeordnet ist, dass das gereinigte Wasser am Ausgang der Membranen (10) zu einer Speicherwanne (6) abgeleitet wird.

8. Anlage nach Anspruch 7, bei der eine Pumpe (70) stromabwärts zu der Speicherwanne (6) angeordnet ist, um das in der Wanne gespeicherte Wasser zu einem Aktivkohlefilter (8) zu leiten.

9. Anlage nach einem der Ansprüche 7 oder 8, bei der die Ausgangspumpe (40) umkehrbar ist, um in der Speicherwanne (6) gespeichertes gereinigtes Wasser zum Ausgang der Membranen (10) zu leiten und eine Rückwaschung der Membranen durchzuführen.

10. Anlage nach einem der vorhergehenden Ansprüche, bei der der Reaktor (1) Fühler umfasst, um die Qualität des zu behandelnden verschmutzten Wassers zu analysieren, wobei die Fühler mit den Mitteln (2, 20) angeordnet sind, um das gasförmige Ozon einzuleiten, um die eingeleitete Ozonmenge und die Ozonierungsperioden in Abhängigkeit von der Qualität des analysierten Wassers zu regeln.

11. Anlage nach einem der vorhergehenden Ansprüche, bei der die Membranen (10) in Gruppen im Inneren des Reaktors (1) organisiert sind, wobei die Ausgänge der Membranen einer selben Gruppe mit einer selben Ableitung (101, 102, 103, 104) verbunden sind, die mit einem Ventil (1010, 1020, 1030, 1040) versehen ist, wobei das Öffnen und Schließen jedes der Ventile unabhängig gesteuert werden, um die Anzahl von gleichzeitig zu aktivierenden Membrangruppen zu steuern.

12. Bewegliche Einheit für die Behandlung von verschmutztem Wasser, **dadurch gekennzeichnet, dass** sie von einem Transportcontainer mit zehn Füßen gebildet ist, in dem die Anlage nach einem der vorhergehenden Ansprüche angeordnet ist.

13. Verfahren, um die Anlage nach den Ansprüchen 1 bis 11 in Betrieb zu nehmen, darin bestehend:
- im Inneren des Reaktors (1) Membranen (10) anzuordnen, die für die Behandlung des zu behandelnden verschmutzten Wassers vorgesehen sind,
- die Durchflussmenge der Eingangs- (30) und Ausgangspumpen (40) derart zu steuern, dass die Membranen je nach verwendetem Membrantyp mit negativem Druck oder mit positivem Druck arbeiten können.

14. Verfahren nach Anspruch 13, bei dem eine Rückwaschung der Membranen ungefähr alle 120 Minuten durchgeführt wird, wobei im Bereich der Ausgänge der Membranen (10) das aus dem Reaktor (1) kommende gereinigte Wasser eingeleitet wird.

## Claims

1. Plant for treating a polluted water, comprising:
- a sealed filtration reactor (1), in which the polluted water to be treated circulates, said reactor being equipped, in use:
o with membranes (10) intended to be passed through by the polluted water in order to selectively separate the particles contained in the water to be treated, said membranes being detachably mounted in a support (11) attached to the inside of the reactor (1),
o with means (2, 20) for injecting gaseous ozone into the reactor,
- an inlet pump (30) arranged upstream of said reactor in order to transport the polluted water from an inlet circuit (3) into said reactor,
- an outlet pump (40) arranged downstream of said reactor in order to discharge the purified water from the outlet of said membranes towards a discharge circuit (4),
being **characterized in that**:
- several cylindrical ceramic membranes (10a) suitable for operating at pressure are grouped together in first modules (100a) that are similar to caissons,
- several flat ceramic membranes (10b) suitable for operating under vacuum are grouped together in second modules (100b) that are similar to caissons,
- the first modules (100a) and the second modules (100b) are of identical shape,
- the reactor (1) alternately receives either the first modules (100a), or the second modules (100b) depending on the initial characteristics of the water to be treated,
- the support (11) comprises housings (110) suitable for alternately receiving, depending on the type of membranes used, and temporarily, either the first modules (100a) or the second modules (100b), the same housings being used to receive and keep in place the first modules (100a) and the second modules (100b), the inlet pump (30) and outlet pump (40) are connected to a control device (5) suitable for varying their pumping rate so that the membranes (10a, 10b) operate at negative pressure or at positive pressure depending on the type of membranes used.

2. Plant according to Claim 1, in which the inlet pump (30) and outlet pump (40) are connected to a control unit (5) via electrical connections (50), which unit is in the form of a computer equipped with an interface that makes it possible to register the desired operating pressure inside the reactor (1), said unit being configured to control the motor of said pumps in order to achieve the desired pressure.

3. Plant according to Claim 1, in which the inlet pump (30) and outlet pump (40) are connected to a control unit (5) via electrical connections (50), which unit comprises a memory zone listed in which is a list of models of membranes combined with their respective operating pressure.

4. Plant according to one of the preceding claims, in which the reactor (1) has aparallelepipedal shape.

5. Plant according to one of Claims 1 to 4, in which the reactor (1) has a substantially cylindrical shape.

6. Plant according to one of the preceding claims, in which:
- the means for injecting gaseous ozone are nozzles (20) connected to an ozone generator (2) and arranged inside the reactor (1) so that the ozone bubbles formed are injected in the direction of all the walls of the membranes (10).

7. Plant according to one of the preceding claims, in which the outlet pump (40) is arranged in order to discharge the purified water at the outlet of the membranes (10) towards a storage tank (6).

8. Plant according to Claim 7, in which a pump (70) is arranged downstream of the storage tank (6) in order to transport the water stored in said tank to an activated carbon filter (8).

9. Plant according to either of Claims 7 and 8, in which the outlet pump (40) is reversible so as to be able to transport purified water stored in the storage tank (6) to the outlet of the membranes (10) and carry out a backwashing of said membranes.

10. Plant according to one of the preceding claims, in which the reactor (1) incorporates sensors for analysing the quality of the polluted water to be treated, said sensors being arranged with the means (2, 20) for injecting gaseous ozone so as to control the injected ozone flow rate and the periods of ozonization as a function of the quality of the water analysed.

11. Plant according to one of the preceding claims, in which the membranes (10) are organized by groups inside the reactor (1), the outlets of the membranes of an identical group being connected to an identical discharge duct (101, 102, 103, 104) equipped with a valve (1010, 1020, 1030, 1040), the opening and closing of each of said valves being managed independently so as to control the number of groups of membranes to be activated simultaneously.

12. Mobile unit for treating a polluted water, that is **characterized in that** it consists of a transportable ten foot container positioned inside which is the plant in accordance with one of the preceding claims.

13. Process for operating the plant in accordance with Claims 1 to 11, consisting in:
- positioning inside the reactor (1), membranes (10) suitable for treating the polluted water to be treated,
- controlling the flow rate of the inlet pump (30) and outlet pump (40) so that said membranes can operate at negative pressure or at positive pressure depending on the type of membranes used.

14. Process according to Claim 13, in which a backwashing of the membranes is carried out approximately every 120 minutes by injecting the purified water resulting from the reactor (1) at the outlets of the membranes (10).
